Europäisches Patentamt

European Patent Office

Office européen des brevets

(19)

(11) Numéro de publication : **0 041 898**
**B1**

(12)

# FASCICULE DE BREVET EUROPÉEN

(45) Date de publication du fascicule du brevet :
07.08.85

(51) Int. Cl.⁴ : **H 02 H   6/00**

(21) Numéro de dépôt : **81400908.0**

(22) Date de dépôt : **05.06.81**

(54) **Dispositif de simulation de l'échauffement instantané d'un composant semi-conducteur de puissance en vue de sa protection.**

(30) Priorité : **11.06.80 FR 8013360**

(43) Date de publication de la demande :
**16.12.81 Bulletin 81/50**

(45) Mention de la délivrance du brevet :
**07.08.85 Bulletin 85/32**

(84) Etats contractants désignés :
**BE CH DE GB IT LI NL SE**

(56) Documents cités :
**DE-A- 2 140 290**
**FR-A- 2 212 668**
**FR-A- 2 336 799**

(73) Titulaire : **LA TELEMECANIQUE ELECTRIQUE**
**33 bis, avenue du Maréchal Joffre**
**F-92000 Nanterre (FR)**

(72) Inventeur : **Planche, Jean-Pierre**
**Résidence Les Fougères Bat. 4 - Rue Henri Prou**
**F-78340 Les Clayes Sous Bois (FR)**

(74) Mandataire : **Marquer, Francis**
**CABINET MOUTARD 35, avenue Victor Hugo Rési-**
**dence Champfleury**
**F-78180 Voisins le Bretonneux (FR)**

Jouve, 18, rue St-Denis, 75001 Paris, France

EP 0 041 898 B1

## Description

Les thyristors, et autres composants semi-conducteurs de puissance, tels que : diodes, transistors travaillant à la saturation et triacs, sont habituellement dimensionnés pour pouvoir supporter sans risque de détérioration la puissance maximale qui peut leur être demandée de manière temporaire. Il en résulte qu'ils sont largement surdimensionnés pour la puissance normale d'utilisation.

Dans certaines applications où des courants qui peuvent atteindre plusieurs fois le courant normal d'utilisation, par exemple la commande de démarrage, les contacteurs statiques ou hybrides, circulent temporairement dans le composant, il serait intéressant, pour éviter le surdimensionnement du composant, de pouvoir simuler avec précision et en permanence l'échauffement subi par la jonction, afin de déclencher un organe de sécurité ou une alarme en cas de dépassement d'une température de consigne inférieure à la température maximale autorisée.

Ce problème n'a pas été résolu jusqu'ici de manière satisfaisante.

Pour un composant semi-conducteur de puissance comportant un boîtier et un radiateur, on peut définir une résistance thermique $R_{jb}$ entre la jonction et le fond de boîtier, dont la valeur est donnée par le constructeur. On peut de même définir une résistance thermique $R_{br}$ entre le boîtier et le radiateur dont la valeur peut être donnée par le constructeur et une résistance thermique $R_{ra}$ entre le radiateur et l'atmosphère ambiante. Cette dernière, ainsi que $R_{br}$, lorsque sa valeur n'est pas donnée par le constructeur, peuvent être mesurées par collage d'un thermo-couple sur les éléments considérés et application de la formule :

$$\Delta T = P \times R_{th}$$

$R_{th}$ étant la résistance thermique à mesurer, P la puissance transmise et $\Delta T$ la différence de température entre les extrémités de l'élément.

Cette mesure n'est pas, en pratique, susceptible d'être effectuée à l'échelle de la fabrication industrielle du produit, car le thermo-couple est difficile à monter de manière stable sans ajout d'une masse importante qui augmente excessivement la constante de temps thermique de l'élément mesuré.

Toutefois, il est possible de l'effectuer en laboratoire sur un échantillon du composant.

Selon une autre solution décrite dans le brevet FR 2 336 799, il a également été proposé, en vue du contrôle de la température de jonction de dispositifs à semi-conducteurs, d'élaborer un premier signal représentatif de la puissance moyenne dissipée au niveau de la jonction, un deuxième signal représentatif de la différence de température entre la jonction et le dispositif de refroidissement, un troisième signal représentatif de la différence de température entre la température du dispositif de refroidissement et la température ambiante, et un quatrième signal représentatif de la température ambiante. La température de la jonction est alors obtenue à partir de la somme des deuxième, troisième et quatrième signaux. Toutefois, il s'avère que cette solution ne résout pas les problèmes liés aux constantes de temps respectives associées aux résistances thermiques du dispositif à semi-conducteurs et, notamment, à la constante de temps thermique entre la jonction et le fond du boîtier, la constante de temps thermique entre le boîtier et le dispositif de refroidissement et la constante de temps thermique entre le dispositif de refroidissement et l'air ambiant.

Par ailleurs, par le brevet 2 212 668 on connaît également un dispositif permettant de surveiller d'une façon précise l'échauffement d'éléments de circuits électriques à protéger parcourus par un courant, même lorsque l'échauffement se produit avec une constante de temps thermique élevée. Toutefois, ce dispositif est destiné à la surveillance de l'échauffement d'éléments de réseau tels que des conducteurs ou des câbles et ne résout pas le problème spécifique de la protection d'un composant semi-conducteur de puissance. En outre, ce brevet utilise une tension continue proportionnelle à l'amplitude du courant de conduction, cette tension continue étant appliquée à un convertisseur tension-fréquence contenu dans un dispositif convertisseur à la sortie duquel se forment des impulsions dont la fréquence augmente proportionnellement au carré de cette tension continue. Ceci implique nécessairement l'emploi d'un multiplieur à découpage temporel (« time division multiplier ») complexe et onéreux car utilisant des composants chers.

La présente invention repose sur la découverte expérimentale du fait que la résistance thermique totale instantanée d'un composant électronique du type susvisé est approximativement donnée par la formule :

$$R_{th} = R_{JB}\,(1-e^{-t/\tau jb}) + R_{br}\,(1-e^{-t/\tau br}) + R_{ra}\,(1-e^{-t/\tau ra})$$

dans laquelle t est le temps et $\tau jb$, $\tau br$ et $\tau ra$ sont les constantes de temps respectives associées aux résistances thermiques $R_{jb}$, $R_{br}$ et $R_{ra}$.

L'invention consiste à simuler la puissance moyenne dissipée par le composant et à injecter le signal image de cette puissance à l'entrée de moyens de simuler la résistance thermique totale instantanée, de façon à obtenir finalement un signal image de l'échauffement subi par le composant.

A cet effet elle propose un dispositif de simulation de l'échauffement instantané d'un composant semi-conducteur de puissance en vue de sa protection comprenant la combinaison suivante :

a) de moyens (TI, R1) de simuler l'intensité instantanée I du courant qui circule dans le composant,

b) de moyens (VM et EC) de simuler, à partir du signal image de l'intensité instantanée, le courant moyen (Im) et le courant efficace $I_{eff}$ et son carré,

c) de moyens (S) de sommation du courant moyen et du carré du courant efficace, affectés de coefficients de pondération qui représentent des valeurs maximales garanties par le constructeur, ces moyens engendrant un signal $I(P_m)$ simulant la puissance moyenne dissipée par le composant,

d) de moyens ($K\tau_{jb}$, $K\tau_{br}$ et $K\tau_{ra}$) de simuler les constantes de temps des résistances thermiques $R_{jb}$, $R_{br}$ et $R_{ra}$ susvisées, le signal image de ladite puissance moyenne fourni par les moyens visés en (c) étant appliqué à l'entrée desdits moyens de simulation des constantes de temps, et

e) des moyens ($S_1$) de sommation des signaux images des constantes de temps susvisées, affectées de coefficients de pondération correspondant aux valeurs, données par le constructeur ou préalablement mesurées, desdites résistances thermiques, en vue d'obtenir un signal image de l'échauffement subi par le composant.

Selon l'invention, ce dispositif est plus particulièrement caractérisé en ce que lesdits moyens ($K\tau_{ra}$) de simuler la constante de temps thermique du radiateur par rapport à l'atmosphère ambiante comprennent un condensateur ($C_7$) relié à la sortie des susdits moyens de sommation fournissant le signal $I(P_m)$, par l'intermédiaire d'une résistance ($R_{22}$) et d'un interrupteur-découpeur ($CA_1$) connecté en série avec ladite résistance, cet interrupteur-découpeur étant commandé par des moyens ($B_1T_1$) d'engendrer des impulsions périodiques.

Selon un mode d'exécution de l'invention, lesdits moyens de simuler le carré du courant efficace comportent une bascule monostable (M), une base de temps (BT) réarmant ladite bascule par des signaux de faible rapport cyclique ; un condensateur ($C_2$) déchargé périodiquement par la bascule monostable et chargé à courant constant par un transistor ($Q_1$), un comparateur ($A_2$) qui reçoit, d'une part, la tension aux bornes dudit condensateur ($C_2$), d'autre part, la valeur absolue (kI) de l'image du courant (I), la sortie dudit comparateur étant appliquée à la bascule monostable pour provoquer ladite décharge, et un amplificateur ($A_3$) sur lequel est appliquée la tension aux bornes du condensateur ($C_2$) qui fournit sur sa sortie un signal proportionnel au carré de l'intensité efficace $I_{eff}^2$.

Pour un thyristor, on sait que la puissance P est liée au courant moyen $I_m$ et au courant efficace $I_{eff}$ par la relation :

$$P = V_o\, I_m + R_d\, I_{eff}^2$$

$V_o$ (tension de seuil) et $R_d$ (résistance dynamique) sont variables d'un composant à l'autre d'une série, mais leurs valeurs maximales garanties, données par le constructeur, constitueront les coefficients de pondération visés en (c) ci-dessus.

Pour les autres composants semi-conducteurs du genre susvisé, comportant une résistance dynamique en série avec une chute de tension (éventuellement nulle) indépendante du courant, il existe des coefficients équivalents, donnés par le constructeur : par exemple, $V_{ce}$ à saturation et $R_{on}$ pour un transistor en saturation.

On notera que les constantes de temps $\tau jb$, $\tau br$ et $\tau ra$ ont des valeurs très inégales, de l'ordre de la fraction de seconde pour la première, de quelques secondes pour la deuxième et de 50 à 1 000 secondes pour la troisième.

Si les deux premières constantes de temps peuvent être simulées au moyen de simples circuits à RC, il n'en est pas de même pour la dernière.

C'est pourquoi une particularité importante de l'invention consiste à appliquer, en vue de la simulation de $\tau ra$, un dispositif du type décrit dans le brevet français déposé par la Demanderesse le 7 décembre 1979 sous le n° 79 30094 pour « Dispositif de simulation d'un phénomène variable dans le temps avec une constante de temps élevée, notament la température d'une charge électrique ».

Ce dispositif comprend un condensateur chargé et/ou déchargé par une tension d'entrée à travers une résistance et est caractérisé par un interrupteur-découpeur, connecté en série avec ladite résistance, et par des moyens d'engendrer des impulsions périodiques commandant ledit interrupteur-découpeur.

D'autres particularités, ainsi que les avantages de l'invention, apparaîtront clairement à la lumière de la description ci-après.

Aux dessins annexés :

La figure 1 est un schéma de principe d'un dispositif de simulation de l'échauffement conforme au mode d'exécution préféré de l'invention,

La figure 2 représente une forme d'exécution préférée des circuits de simulation de la puissance moyenne,

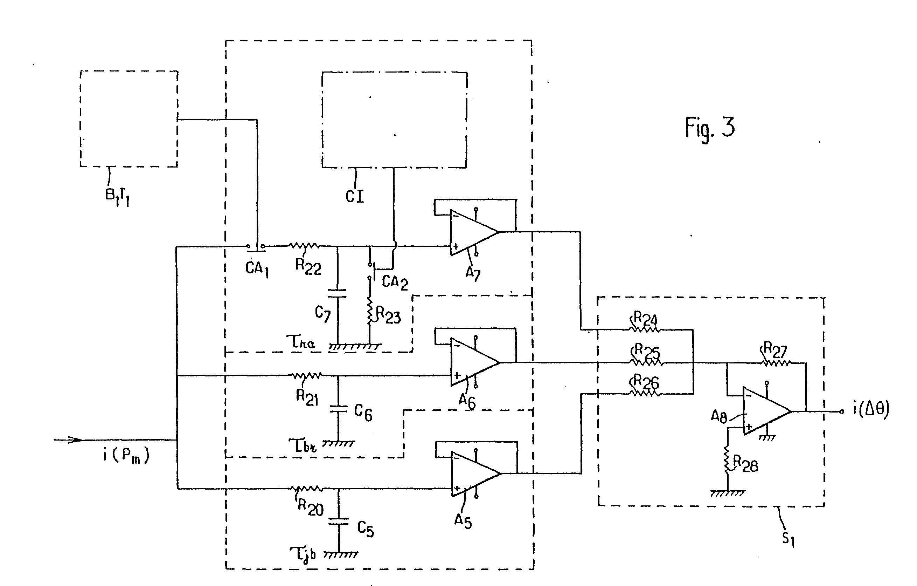

La figure 3 représente une forme d'exécution préférée des circuits de simulation des constantes de temps et de l'image de l'échauffement, et,

La figure 4 représente les formes d'ondes en différents points de ces circuits.

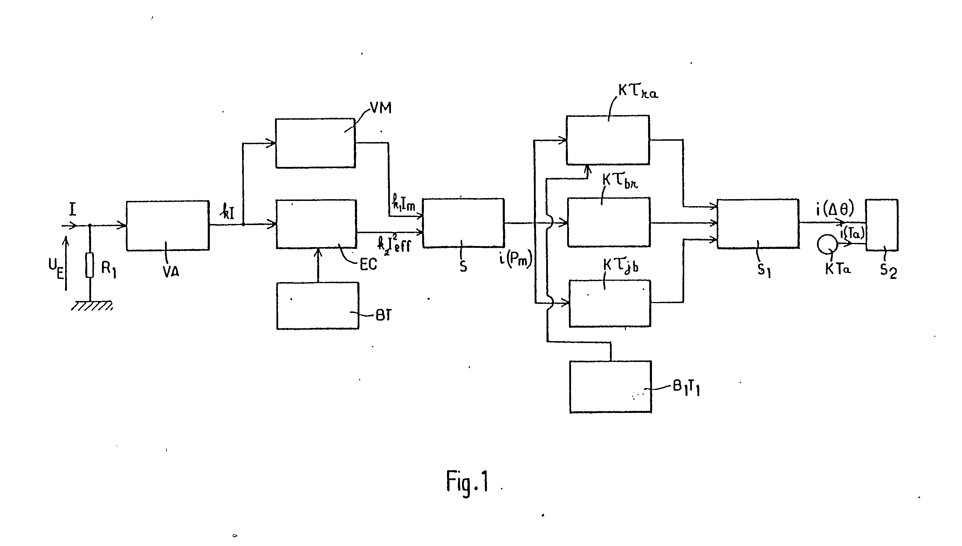

A la figure 1, on a représenté une résistance $R_1$ qui traduit en une tension $U_E$ l'intensité I dans le composant et un circuit VA qui donne la valeur absolue kI de $U_E$, k étant une constante. Cette information est envoyée, d'une part sur un circuit VM de calcul de la valeur moyenne $k_1I_m$, d'autre part sur un circuit

3

EC élévateur au carré qui calcule le carré de la valeur efficace $k_2 I_{eff}^2$ ; (ce circuit est associé à une base de temps BT).

La valeur moyenne et le carré de la valeur efficace sont appliqués à un sommateur S avec les coefficients de pondération $k_1$ et $k_2$ qui permettent d'obtenir un signal image i(Pm) de la puissance moyenne dissipée. Ce signal est injecté à l'entrée de trois circuits $K\tau_{ra}$, $K\tau_{br}$ et $K\tau_{jb}$ qui simulent les constantes de temps respectives $\tau_{ra}$, $\tau_{br}$ et $\tau_{jb}$ et sont attaqués par une base de temps $B_1T_1$. Comme on l'a expliqué ci-dessus, les circuits $K\tau_{br}$ et $K\tau_{jb}$ peuvent être du type traditionnel à résistance-capacité, tandis que le troisième est du type décrit dans la demande de brevet français susvisée.

Les sorties de ces trois circuits sont appliquées, avec des coefficients de pondération correspondant aux trois résistances thermiques respectives susvisées, à un sommateur $S_1$ dont la sortie donne un signal i ($\Delta\theta$) image de l'échauffement de la jonction du composant semi-conducteur.

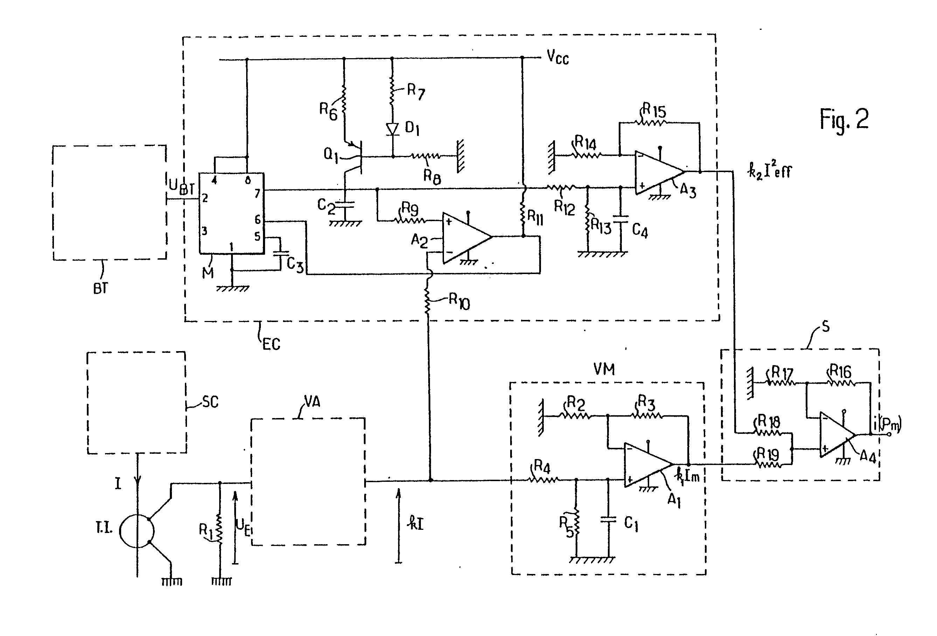

Les différentes fonctions décrites ci-dessus peuvent être réalisées de la façon suivante : l'intensité I dans le composant SC peut être lue à l'aide d'un transformateur d'intensité T.I. (figure 2) et transformée en tension $U_E$ à l'aide de la résistance $R_1$.

Le circuit VA d'établissement de la valeur absolue est de forme classique (redresseur sans seuil).

Le circuit valeur moyenne VM est composé d'un amplificateur opérationnel $A_1$ dont le gain est déterminé par un diviseur formé de résistances $R_2$ et $R_3$.

Des résistances $R_4$ et $R_5$ et un condensateur $C_1$ forment un filtre qui permet de prendre la valeur moyenne du signal kI.

La base de temps BT est un générateur de signaux carrés de rapport cyclique faible qui attaquent le circuit EC, pour réarmer le monostable M que comprend EC et qui est, par exemple, du type LM 555.

Le monostable M décharge périodiquement un condensateur $C_2$, lequel est chargé à courant constant par un transistor $Q_1$.

Le courant de charge est déterminé par une résistance $R_6$ et un pont diviseur de base composé de résistances $R_7$, $R_8$ et d'une diode $D_1$. Cette dernière compense les variations de la tension base-émetteur du transistor en fonction de la température.

La tension aux bornes de $C_2$ est envoyée à l'entrée positive d'un comparateur $A_2$ (à travers une résistance $R_9$) dont la sortie bascule lorsque la tension sur ladite entrée positive devient supérieure à la tension kI envoyée sur l'entrée négative à travers une résistance $R_{10}$.

Le front montant de la sortie de $A_2$ est envoyé sur la broche 6 de M et provoque la décharge du condensateur $C_2$.

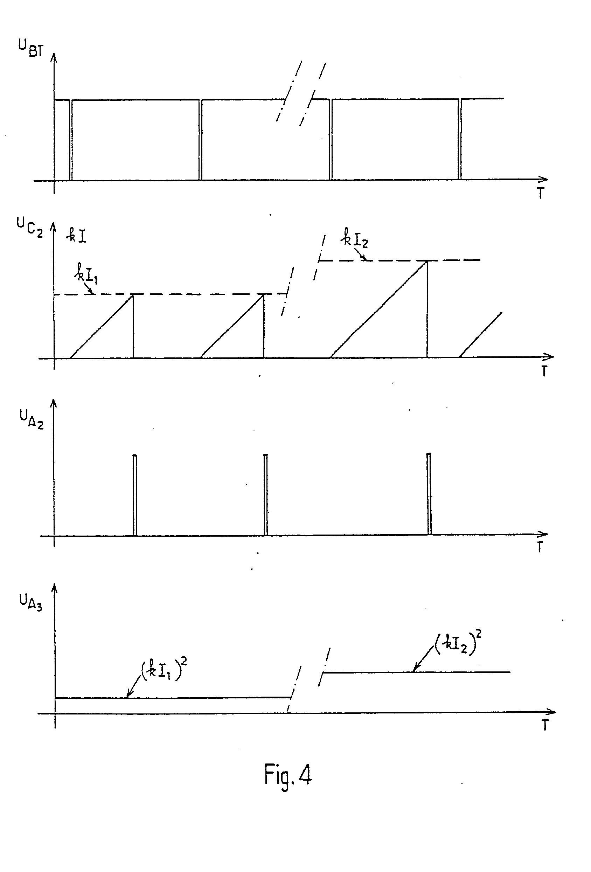

L'autorisation de charge du condensateur $C_2$ n'interviendra que lors d'un front descendant de la base de temps BT (voir diagramme figure 4).

Un condensateur $C_3$ améliore la stabilité.

Une résistance $R_{11}$ est la résistance de charge de l'étage de sortie du comparateur.

La durée de la charge du condensateur $C_2$ est proportionnelle à la tension kI, de même que son amplitude. L'aire du triangle ainsi décrit est donc proportionnelle au carré de l'intensité. Cette tension est prélevée par un pont diviseur $R_{12}$ $R_{13}$ et filtrée par un condensateur $C_4$, pour être appliquée à un amplificateur opérationnel $A_3$.

La sortie de l'amplificateur opérationnel $A_3$, dont le gain est fixé par un pont diviseur $R_{14}R_{15}$, est donc proportionnelle au carré de l'intensité efficace.

Un amplificateur opérationnel $A_4$, dont le gain est déterminé par un pont diviseur composé de résistances $R_{16}$ $R_{17}$, reçoit sur son entrée positive les signaux de sortie de $A_3$ et de $A_1$, respectivement pondérés par des résistances $R_{18}$ et $R_{19}$.

La tension de sortie de $A_4$ est donc l'image de la puissance moyenne dans le semi-conducteur.

La constante de temps jonction boîtier $\tau_{jb}$ est réalisée par une résistance $R_{20}$ et un condensateur $C_5$ suivis d'un amplificateur opérationnel $A_5$ monté en suiveur.

La constante de temps boîtier radiateur $\tau_{br}$ est réalisée par une résistance $R_{21}$ et un condensateur $C_6$ chargé par un amplificateur opérationnel $A_6$ monté en suiveur.

La constante de temps radiateur-atmosphère ambiante $\tau_{ra}$ est réalisée par une résistance $R_{22}$, un condensateur $C_7$ et par un système à découpage composé d'une base de temps $B_1T_1$ délivrant des signaux carrés de rapport cyclique faible (1/1 000 par exemple) et de période 1 seconde environ. Ces signaux commandent un commutateur analogique $CA_1$.

Ce système permet de multiplier artificiellement la constante de temps $R_{22} \times C_7$ par le rapport cyclique de la base de temps $B_1T_1$.

La tension aux bornes du condensateur $C_7$ est prélevée par un amplificateur opérationnel $A_7$ qui peut être du type à transistor à effet de champ, ce dernier étant monté en suiveur.

Une résistance $R_{23}$ permet de décharger le condensateur $C_7$ à l'aide d'un second commutateur analogique $CA_2$, en fonction des conditions initiales (symbolisées par un rectangle CI).

Les sorties des trois étages suiveurs $A_7$, $A_6$ et $A_5$ sont envoyées sur un amplificateur opérationnel $A_8$ à travers des résistances d'entrée $R_{24}$, $R_{25}$ et $R_{26}$ respectivement.

Ces résistances fixent le poids de chaque résistance thermique par rapport à la résistance thermique totale.

$R_{27}$ est une résistance de gain, $R_{28}$ une résistance de compensation du courant de dérive de l'amplificateur $A_8$.

4

La sortie de l'amplificateur $A_8$ est donc proportionnelle en valeur instantanée à l'échauffement de la jonction du composant semi-conducteur.

Pour la gamme de temps où l'on recherche la validité de cette simulation et pour certains types de composants semi-conducteurs, on peut supprimer les circuits de constante de temps $\tau_{jb}$ et $\tau_{br}$, en ne tenant compte que de la valeur finale des constantes de temps correspondantes.

On a représenté à la figure 1 un capteur de mesure KTa de la température ambiante Ta, constitué par exemple par une résistance à coefficient de température négatif. Le courant image de Ta est ajouté dans un sommateur $S_2$ au courant image de l'échauffement $\Delta\theta$ pour donner l'image de la température réelle de la jonction. Cela permet d'utiliser le composant au maximum de ses possibilités, en particulier lorsque la température ambiante est relativement faible.

**Revendications**

1. Dispositif de simulation de l'échauffement instantané d'un composant semi-conducteur de puissance en vue de sa protection, comprenant la combinaison :

a) de moyens (TI, R1) de simuler l'intensité instantanée I du courant qui circule dans le composant,

b) de moyens (VM et EC) de simuler, à partir du signal image de l'intensité instantanée, le courant moyen (Im) et le courant efficace $I_{eff}$ et son carré,

c) de moyens (S) de sommation du courant moyen et du carré du courant efficace, affectés de coefficients de pondération qui représentent des valeurs maximales garanties par le constructeur, ces moyens engendrant un signal $I(P_m)$ simulant la puissance moyenne dissipée par le composant,

d) de moyens ($K\tau_{jb}$, $K\tau_{br}$ et $K\tau_{ra}$) de simuler les constantes de temps des résistances thermiques $R_{jb}$, $R_{br}$ et $R_{ra}$ susvisées, le signal image de ladite puissance moyenne fourni par les moyens visés en (c) étant appliqué à l'entrée desdits moyens de simulation des constantes de temps, et

e) des moyens ($S_1$) de sommation des signaux images des constantes de temps susvisées, affectées de coefficients de pondération correspondant aux valeurs, données par le constructeur ou préalablement mesurées, desdites résistances thermiques, en vue d'obtenir un signal image de l'échauffement subi par le composant, caractérisé en ce que lesdits moyens ($K\tau_{ra}$) de simuler la constante de temps thermique du radiateur par rapport à l'atmosphère ambiante comprennent un condensateur ($C_7$) relié à la sortie des susdits moyens de sommation fournissant le signal $I(P_m)$, par l'intermédiaire d'une résistance ($R_{22}$) et d'un interrupteur-découpeur ($CA_1$) connecté en série avec ladite résistance, cet interrupteur-découpeur étant commandé par des moyens ($B_1T_1$) d'engendrer des impulsions périodiques.

2. Dispositif selon la revendication 1, caractérisé en ce que lesdits moyens de simuler le carré du courant efficace comportent une bascule monostable (M), une base de temps (BT) réarmant ladite bascule par des signaux de faible rapport cyclique ; un condensateur ($C_2$) déchargé périodiquement par la bascule monostable et chargé à courant constant par un transistor ($Q_1$), un comparateur ($A_2$) qui reçoit, d'une part, la tension aux bornes dudit condensateur ($C_2$), d'autre part, la valeur absolue (kI) de l'image du courant (I), la sortie dudit comparateur étant appliquée à la bascule monostable pour provoquer ladite décharge, et un amplificateur ($A_3$) sur lequel est appliquée la tension aux bornes du condensateur ($C_2$) qui fournit sur sa sortie un signal proportionnel au carré de l'intensité efficace $I_{eff}^2$.

**Claims**

1. A device for simulating an instantaneous temperature-rise of a semi-conductor power component in order to protect same, comprising, in combination :

a) means (TI, R1), for simulating the instantaneous intensity (I) of the current flowing through said component ;

b) means (VM and EC) for simulating the mean current intensity (Im) and the effective current $I_{eff}$ as well as the square thereof, from the image signal of the instantaneous intensity ;

c) means (S) for summing said mean current and said squared effective current, with weighting coefficients representing the maximum values guaranteed by the manufacturer, in order to simulate the mean power dissipated by said component by a signal $I(P_m)$ produced by these means ;

d) means ($K\tau_{jb}$, $K\tau_{br}$ and $K\tau_{ra}$) for simulating the time constants of the above mentioned thermal resistances $R_{jb}$, $R_{br}$ and $R_{ra}$, the image signal of said mean power provided by the means under (c) being fed into the input of said means for simulating the time constants ; and

e) means ($S_1$) for summing the image signals of the above-mentioned time constants, with weighting coefficients corresponding to the values, provided by the manufacturer or previously measured, of said thermal resistances, with a view to obtaining an image signal of the temperature-rise undergone by said component, wherein said means ($K\tau_{ra}$) for simulating the thermal time constant of the radiator with respect to the environment comprise a capacitor ($C_7$) connected to the output of the above mentioned summing means supplying signal $I(P_m)$ through a resistor ($R_{22}$) and a chopper-switch ($CA_1$) mounted in series with said resistor, this chopping-switch being controlled by means ($B_1$, $T_1$) for generating periodic pulses.

2. A device according to claim 1, wherein said means for simulating the square of the effective current comprise a monostable flip-flop (M), a time-base (BT) adapted for resetting said flip-flop by means of signals of low cyclic ratio ; a capacitor ($C_2$) adapted to be periodically discharged by the monostable flip-flop and charged with a constant current by a transistor ($Q_1$), a comparator ($A_2$) adapted to be fed, on the one hand, by the voltage at the terminals of said capacitor ($C_2$), and by the absolute value (kl) of the current image (l), on the other hand, the output of said comparator being fed into said monostable flip-flop in order to induce said discharge, and an amplifier ($A_3$) to which is fed the tension at the terminals of the capacitor ($C_2$) which provides, at its output, a signal proportional to the square of the effective intensity $I_{eff}$.

**Patentansprüche**

1. Vorrichtung zur Simulation einer plötzlich auftretenden Erwärmung eines Leistungshalbleiterbauelementes im Hinblick auf seinen Schutz, mit, in Verbindung :

a) Mitteln (TI, R1), um die plötzlich auftretende Intensität (I) des im Element fliessenden Stroms zu simulieren ;

b) Mitteln (VM und EC), um, vom Signal, welches die plötzlich auftretende Intensität wiedergibt, ausgehend, den durchschnittlichen Strom ($I_m$) und den Vorwärtsstrom-Effektivwert $I_{eff}$ und dessen Wert im Quadrat zu simulieren ;

c) Mittel (S), um den durchschnittlichen Strom und den Vorwärtsstrom-Effektivwert im Quadrat zu summieren, wobei auf beide Werte ein Abwägkoeffizient angewandt wird, welcher die vom Hersteller garantierten Maximalwerte darstellt, und diese Mittel ein Signal I($P_m$) hervorbringen, welches die vom Element durchschnittlich in Wärme umgesetzte Leistung simuliert ;

d) Mittel ($K\tau_{jb}$, $K\tau_{br}$, $K\tau_{ra}$), um die Zeitkonstanten der oben erwähnten Wärmewiderstände $R_{jb}$, $R_{br}$ und $R_{ra}$ zu simulieren, wobei das von den Mitteln (c) hervorgebrachte Signal, welches die besagte durchschnittliche Leistung wiedergiebt, auf den Eingang besagter Mittel zur Simulierung der Zeitkonstanten angewandt wird ; und

e) Mittel ($S_1$) zur Summierung der Signale, welche die obenerwähnten Zeitkonstanten, auf die den vom Hersteller angegebenen oder vorher gemessenen Werten entsprechende Abwägkoeffizienten der Wärmewiderstände angewandt werden, um auf diese Weise ein Signal zu erhalten, welches die vom Element erfahrene Erwärmung wiedergibt,

dadurch gekennzeichnet, dass zu den besagten Mitteln ($K\tau_{ra}$) um die Wärmezeitkonstante des Heizgerätes im Verhältnis zur Umgebung zu simulieren, ein Kondensator ($C_7$) gehört, welcher an besagte Simulierungsmittel, welche das Signal I($P_m$) hervorbringen, durch einen Widerstand ($R_{22}$) und einen mit besagtem Widerstand serienverbundenen strobenden Schalter ($A_1$) angeschlossen ist, wobei dieser strobende Schalter durch Mittel ($B_1$, $T_1$) zur Erzeugung von regelmässigen Impulsen gesteuert wird.

2. Vorrichtung nach Anspruch 1, dadurch gekennzeichnet, dass besagte Mittel, um das Quadrat des Vorwärtsstrom-Effektivwertes zu simulieren, eine monostabile Kippschaltung (M) haben, eine Zeitbasis (BT), welche besagte Kippschaltung durch Signale mit geringem zyklischem Verhältniswert rückstellt, einen Kondensator ($C_2$), der regelmässig von der monostabilen Kippschaltung entladen wird und mit konstantem Strom aufgeladen wird durch einen Transistor ($Q_1$), einen Komparator ($A_2$), der einerseits die Spannung an den Klemmen besagten Kondensators ($C_2$) erhält und andererseits den absoluten Wert (kl) des Strombildes (I) wobei der Ausgang besagten Komparators auf die monostabile Kippschaltung angewandt wird, um besagte Entladung zu bewirken, und einen Verstärker ($A_3$), auf den die Spannung an den Klemmen des Kondensators ($C_2$), angewandt wird, welcher an seinem Ausgang ein Signal hervorbringt, das proportionell ist zum Quadrat des Vorwärtsstrom-Effektivwertes $I_{eff}^2$.

Fig.1

0 041 898

Fig. 2

0 041 898

Fig. 3

0 041 898

Fig. 4